# EUROPEAN PATENT APPLICATION

(11) **EP 4 019 355 A1**
(43) Date of publication of application: **29.06.2022**
(21) Application number: 20216326.7
(22) Date of filing: 22.12.2020
(51) Int. Cl.: B60W 40/12, B60W 40/02, B60W 40/10

(54) **ELECTRIC BICYCLE**

(71) Applicant: Mahle International GmbH, 70376 Stuttgart (DE)
(72) Inventor: Moreton Fernandez, Ana, Palencia (ES); Rico Sanz, Alberto Jesus, Valladolid (ES); Rakhnenko, Yaroslav, Palencia (ES)
(74) Representative: BRP Renaud & Partner mbB Rechtsanwälte Patentanwälte Steuerberater

(57) **Abstract**

The present invention relates to an electric bicycle (1) and to an operating method for a control unit (5) of a human-machine interface unit (4) of such an electric bicycle (1).

The present invention is based on the general concept that, any operational parameter from the different ECUs of the electric bicycle (1) together with potential acceleration data and potential gyroscope data provided by a system unit of the electric bicycle (1) to control of the electric bicycle (1).

## Description

The present invention relates to an electric bicycle and to an operating method for a control unit of a human-machine interface unit of such an electric bicycle.

US 2020/0014322 A1 describes a human-powered vehicle control device including an artificial intelligence processor, an operation device, and a communication device. The artificial intelligence processor is configured to generate second information for controlling an electric component of a human-powered vehicle in accordance with first information related to at least one of the human-powered vehicle, a rider of the human-powered vehicle, and an environment of the human-powered vehicle.

In a case where the first information includes information related to the inclination of the human-powered vehicle, a detector includes an inclination sensor. The inclination sensor is provided on the human-powered vehicle and detects the inclination angle of the human-powered vehicle. The inclination angle of the human-powered vehicle includes at least one of a pitch angle, a roll angle, and a yaw angle. The inclination sensor includes, for example, at least one of a gyro sensor and an acceleration sensor.

US 2018/0197401 A1 describes an unexpected event detection system being provided for a rider operating an electric bicycle. The system includes a bicycle data unit configured to receive bicycle data from the electric bicycle; a wireless device data unit configured to receive device data from a wireless device; an unexpected event module coupled to receive the bicycle data from the bicycle data unit and to receive the device data from the wireless device, the unexpected event module configured to identify an unexpected event associated with the electric bicycle based on the bicycle data and the device data and to generate an alert message upon identification of the unexpected event; and an alert module coupled to the unexpected event module and configured to initiate sending the alert message to an assistance center.

A wireless device data unit collects various types of device data from other components of the wireless device. In one embodiment, the data includes acceleration data, GNSS data, magnetometer data, and/or gyroscope data.

The human-powered vehicle control device according to US 2020/0014322 A1 uses information which are taken from sensors, so that if a malfunction of a sensor occurs, the operation of the device according to US 2020/0014322 A1 is not ensured.

In contrast to US 2020/0014322 A1, in some embodiments of US 2018/0197401 A1 one or more sensors may be omitted, and if necessary, associated data may be derived or estimated in another manner. However, acceleration data and/or gyroscope data is only provide via the wireless device. In case of a connection failure of the wireless device, a wireless device failure due to low battery status or because the user has forgotten the mobile device, these data cannot be used in the system according to US 2018/0197401.

The present invention therefore deals with the problem of specifying an improved or at least an alternative embodiment of an electric bicycle. In particular, the improved or alternative embodiment of the electric bicycle may be optimised with respect to security requirements.

This problem is solved according to the invention by the subject matter of the independent claims. Advantageous embodiments are the subject matter of the dependent claims.

The present invention is based on the general concept that, any operational parameter from the different ECUs of the electric bicycle together with potential acceleration data and potential gyroscope data provided by a system unit of the electric bicycle to control the electric bicycle, are used in particular to check the plausibility of sensor data which is provided via a bicycle bus system and/or to control the power given to an electric motor of the electric bicycle based in more reliable parameters. Here, "potential" means that this data can be used, but does not have to be used. Thus, the system unit providing acceleration data and/or gyroscope data is an optional feature.

The electric bicycle, in particular a pedelec, comprises a bicycle bus system for communication, in particular for a wired and/or wireless communication, between components of the electric bicycle. The components of the electric bicycle may be ECUs (electronic control units) of the electric bicycle. A component of the electric bicycle may be a sensor unit and/or a component of the electric bicycle may comprise a sensor unit. The electric bicycle may comprise environment sensor units and/or system sensor units and/or use measures of different kind of components that may come from external data. A component of the electric bicycle may be at least one biometric sensor unit providing at least one biometric parameter of the rider of the electric bicycle. Biometric parameters provided by the biometric sensor unit may be the heart rate of the rider and/or the blood pressure of the rider and/or oxygen saturation of the blood of the rider and/or VO₂ max (maximal oxygen consumption) of the rider and/or the weight of the rider and/or the age of the rider or other biometric parameters of the rider. In particular, the biometric sensor unit may be wirelessly connected to the bicycle bus system. In particular, the biometric sensor unit may be formed by a smart phone and/or smart watch. The biometric parameter may be given in bpm (beat per minute), VO₂ or others.

The electric bicycle according to the invention may be a pedelec. A pedelec (pedal electric cycle) may include conventional bicycle components integrated with an electric motor unit that may be used for propulsion, including assisting or supplementing the pedal power supplied by the rider.

The electric bicycle comprises at least one component or several components of the electric bicycle which are connected to the bicycle bus system for providing operational parameters of the electric bicycle via the bicycle bus system.

The electric bicycle comprises at least one control unit being connected to the bicycle bus system for receiving operational parameters of the electric bicycle via the bicycle bus system, wherein the control unit is programmed and/or formed to determine system information related to the electric bicycle using at least one parameter of the electric bicycle, which is provided via the bicycle bus system. Biometric parameters of the rider provided by biometric sensor unit via the bicycle bus system are operational parameters of the electric bicycle. The control unit may receive and/or read and/or request the biometric parameter via the bicycle bus system. As an example, by checking the heart rate of the rider the system and/or control unit may predict that a system gearing must be applied and/or that the gear ratio must be adapted either to avoid higher heart rates of the rider or to keep the heart rate of the rider within a predefined training interval.

The control unit is programmed and/or formed to control the electric bicycle depending on the determined system information. The control unit may be programmed and/or formed to send a command message via the bicycle bus system in order to control components of the electric bicycle which are connected to the bicycle bus system.

In an advantageous embodiment of the electric bicycle according to the invention, the electric bicycle comprises at least one accelerometer which is configured to determine an acceleration value, wherein the at least one accelerometer is formed to provide the determined acceleration value to the control unit. Moreover, the electric bicycle comprises at least one gyroscope which is configured to determine an angular rate value, wherein the at least one gyroscope is formed to provide the determined angular rate value to the control unit. The control unit is programmed and/or formed to determine system information related to the electric bicycle depending on the acceleration value provided by the at least one accelerometer, and the angular rate value provided by the at least one gyroscope and at least one operational parameter of the electric bicycle provided via the bicycle bus system.

The at least one accelerometer and/or the at least one gyroscope may be formed by a system unit of the electric bicycle which may be connected to the bicycle bus system and/or which may be connected to the control unit.

In an advantageous embodiment of the electric bicycle according to the invention, the system information determined by the control unit is a predicted operational parameter of the electric bicycle corresponding to an operational parameter of the electric bicycle received via the bicycle bus system, wherein the control unit is programmed and/or formed to compare the received operational parameter with the predicted operational parameter to check the plausibility of data being provided via a bicycle bus system.

The control unit may use a pre-trained model or self-trained model, in particular a decision tree, to determine and/or verify an operational parameter of the electric bicycle, wherein the model predicts the operational parameter depending on an acceleration value provided by the at least one accelerometer and depending on an angular rate value provided by the at least one gyroscope. Thus, any operational parameter from the different ECUs of the electric bicycle together with the acceleration data and gyroscope data provided by a system unit of the electric bicycle is used to control the electric bicycle, in particular to check the plausibility of sensor data which is provided via a bicycle bus system to the control unit and/or to control the power given to a electric motor of the electric bicycle based in more reliable parameters.

Predicted operational parameters can be calculated by the control unit and subsequently provided via the bicycle bus system to other control units. Thus, the predicted operational parameters of the electric bicycle may be used by the different components and/or control units of the electric bicycle (e.g.by the control unit of the human-machine interface). The predicted operational parameters of the electric bicycle may be used by the different components and/or control units of the electric bicycle (e.g. by the control unit of the human-machine interface) for example if a sensor unit is missing or/and malfunctions. These predicted operational parameters may be used to determine environmental information and/or to determine an operational status of the electric bicycle.

In an advantageous embodiment of the electric bicycle according to the invention, acceleration data and gyroscope data provided by a human-machine interface unit is used by a control unit of the human-machine interface to control the electric bicycle, in particular to check the plausibility of sensor data which is provided via a bicycle bus system to human-machine interface and/or to control the power given to an electric motor of the electric bicycle based in more reliable parameters..

The electric bicycle according to the invention may be a pedelec. A pedelec (pedal electric cycle) may include conventional bicycle components integrated with an electric motor unit that may be used for propulsion, including assisting or supplementing the pedal power supplied by the rider.

The electric bicycle comprises a bicycle bus system for communication, in particular for a wired and/or wireless communication, between components of the electric bicycle. A wired communication may be understood here to mean that a bidirectional or unidirectional data connection can be provided between two components that communicate by wire with each other, with which electrical control, regulation and/or measurement signals can be transmitted in analogue or digital form. The bicycle bus system may be a data bus. The bicycle bus system may be a Controller Area Network (CAN) bus system. Components of the electric bicycle may use bicycle bus command which are transferred via the bicycle bus system in order to communicate which each other. A component of the electric bicycle may be at least one biometric sensor unit providing at least one biometric parameter of the rider of the electric bicycle. Biometric parameters provided by the biometric sensor unit may be the heart rate of the rider and/or the blood pressure of the rider and/or oxygen saturation of the blood of the rider and/or VO₂ max (maximal oxygen consumption) of the rider and/or the weight of the rider and/or the age of the rider or other biometric parameters of the rider. In particular, the biometric sensor unit may be wirelessly connected to the bicycle bus system. In particular, the biometric sensor unit may be formed by a smart phone and/or smart watch. The biometric parameter may be given in bpm (beat per minute), VO₂ or others.

The electric bicycle comprises one or more sensor units each configured to determine at least one operational parameter of the electric bicycle, wherein determined operational parameters are made available via the bicycle bus system. One or more sensor units each may be configured to measure at least one operational parameter related to the electric bicycle. The sensor units each may be wired connected to the bicycle bus system for wired communication. Since the determined operational parameters are made available via the bicycle bus system, each component of the electric bicycle being connected to the bicycle bus system may receive these operational parameters via the bicycle bus system.

The human-machine interface unit comprises a control unit which is connected, in particular wired and/or wireless connected, to the bicycle bus system for communication, in particular for wired and/or wireless communication. The control unit may receive and/or read and/or request biometric parameter via the bicycle bus system. As an example, by checking the heart rate of the rider the system and/or control unit may predict that a system gearing must be applied and/or that the gear ratio must be adapted either to avoid higher heart rates of the rider or to keep the heart rate of the rider within a predefined training interval.

The human-machine interface unit comprises at least one accelerometer which is configured to determine an acceleration value which is related to the acceleration of the human-machine interface unit. The at least one accelerometer is formed to provide the determined acceleration value to the control unit. The accelerometer may be formed to measure the acceleration of the human-machine interface along one or more axes (e.g., 3-axis accelerometer).

The human-machine interface unit comprises at least one gyroscope which is configured to determine an angular rate value which is related to the angular rate of the human-machine interface unit. The at least one gyroscope is formed to provide the determined angular rate value to the control unit. The gyroscope may be formed to measure orientation and/or angular rate of the human-machine interface along one or more axes (e.g., 3-axis gyroscope).

The control unit of the human-machine interface unit is programmed and/or formed to determine system information related to the electric bicycle depending on the acceleration value provided by the at least one accelerometer, and the angular rate value provided by the at least one gyroscope and/or at least one operational parameter of the electric bicycle provided via the bicycle bus system. Biometric parameters of the rider provided by biometric sensor unit via the bicycle bus system are operational parameters of the electric bicycle. The control unit may receive and/or read and/or request the biometric parameter via the bicycle bus system.

The system information may be environmental information related to the environment of the electric bicycle, and/or one or more predicted/simulated operational parameter of the electric bicycle, and/or an operational status of the electric bicycle. Predicted operational parameters of the electric bicycle may be used by the control unit of the human-machine interface to check the plausibility of sensor data and/or operational parameters which are provided via a bicycle bus system to human-machine interface. Predicted operational parameters of the electric bicycle may be used by the control unit of the human-machine interface if a sensor unit is missing or/and malfunctions. These predicted operational parameters may be used to determine environmental information and/or to determine an operational status of the electric bicycle and/or of the user riding it. The operational status of the user may for example indicate that the user is pedaling with less force since he/she is tired.

The control unit of the human-machine interface unit is programmed and/or formed to control the electric bicycle depending on the determined system information. The control unit of the human-machine interface unit may programmed and/or formed to send a command message via the bicycle bus system in order to control components of the electric bicycle which are connected to the bicycle bus system.

To control the electric bicycle may mean that the control unit of the human-machine interface unit is programmed and/or formed to predict operational parameters of the electric bicycle. In addition or alternatively, to control the electric bicycle may mean that the control unit of the human-machine interface unit is programmed and/or formed to verify operational parameters of the electric bicycle. In addition or alternatively, to control the electric bicycle may mean that the control unit of the human-machine interface unit is programmed and/or formed to control the electric bicycle and/or components of the electric bicycle. In addition or alternatively, to control the electric bicycle may mean that the control unit of the human-machine interface unit is programmed and/or formed to control the electric bicycle and/or components of the electric bicycle based on predicted operational parameters and/or environmental information and/or operational status of the electric bicycle. In particular, a component of the electric bicycle which is controlled by the control unit of the human-machine interface unit may be an electric motor unit and/or a communication unit for wireless communication.

To verify operational parameters of the electric bicycle may mean that the control unit of the human-machine interface unit is programmed and/or formed to check the plausibility of sensor data and/or operational parameters which are provided via a bicycle bus system to human-machine interface by using the acceleration value provided by the at least one accelerometer, and the angular rate value provided by the at least one gyroscope and/or at least one operational parameter of the electric bicycle provided via the bicycle bus system.

The human-machine interface may be fixed, in particular rigidly fixed, to the electric bicycle. The human-machine interface may be fixed, in particular rigidly fixed, to any part (handlebars, top tube, etc) of the electric bicycle. The human-machine interface may be formed in such a way that it may be detachably connected to the bicycle bus system. The human-machine interface may be located substantianally within the top tube of the electric bicycle frame.

In an advantageous embodiment of the electric bicycle according to the invention, the human-machine interface unit may comprise a display control unit which is formed separately with respect to the control unit. The display control unit is connected to the bicycle bus system for communication, in particular for wired and/or wireless communication. The human-machine interface unit comprises an internal bus system for communication, in particular for wired and/or wireless communication, between components of the human-machine interface unit, wherein the internal bus system is formed separately with respect to bicycle bus system. The internal bus system may be a data bus. The internal bus system may be an Inter-Integrated Circuit bus.

The at least one accelerometer of the human-machine interface unit is connected to the control unit via the internal bus system for communication, in particular for wired and/or wireless communication. The at least one gyroscope of the human-machine interface unit is connected to the control unit via the internal bus system for communication, in particular for wired and/or wireless communication. The display control unit is connected to the control unit via the internal bus system for communication, in particular for wired and/or wireless communication. The control unit of the human-machine interface unit may receive and/or read and/or request the acceleration value and the angular rate value via the internal bus system.

The human-machine interface may comprise a display unit, in particular a touch display, to display information related to electric bicycle and/or to interact with a rider of the electric bicycle. The display unit may be controlled by the display control unit. The control unit may achieve a desired control of the display unit by a sending a command message to the display control unit.

In an advantageous embodiment of the electric bicycle according to the invention, the electric bicycle comprises at least one sensor unit which is configured to determine, in particular to measure, a speed parameter which is related to the speed of the electric bicycle, wherein the determined speed parameter is made available via the bicycle bus system. The speed parameter may be related to a wheel speed of the electric bicycle. The control unit of the human-machine interface unit may receive and/or read and/or request the speed parameter via the bicycle bus system.

Additionally or alternatively, the electric bicycle may comprise at least one sensor unit which is configured to determine, in particular to measure, a pedal torque parameter which is related to the torque of a pedal of the electric bicycle, wherein the determined pedal torque parameter is made available via the bicycle bus system. The electric bicycle may comprise two pedals and two sensor units which are configured to determine, in particular to measure, pedal torque parameters which are related to the torque of the two pedals of the electric bicycle. The control unit of the human-machine interface unit may receive and/or read and/or request at least one pedal torque parameter or both pedal torque parameters via the bicycle bus system.

Additionally or alternatively, the electric bicycle may comprise at least one sensor unit which is configured to determine, in particular to measure, a pedal speed parameter which is related to the rotational speed of a pedal of the electric bicycle. The determined pedal speed parameter is made available via the bicycle bus system. The rotational speed of a pedal of the electric bicycle may be given in revolutions per minute. The control unit of the human-machine interface unit may receive and/or read and/or request the pedal speed parameter via the bicycle bus system.

Additionally or alternatively, the electric bicycle may comprise at least one sensor unit which is configured to determine, in particular to measure, a pedal angle parameter which is related to the angular position of a pedal of the electric bicycle. The determined pedal angle parameter is made available via the bicycle bus system. The pedal angle parameter may be given in degree (0°-360°) relative to an arbitrary but predefined 0° position. The control unit of the human-machine interface unit may receive and/or read and/or request the pedal angle parameter via the bicycle bus system.

Additionally or alternatively, the electric bicycle may comprise at least one sensor unit which is configured to determine, in particular to measure, a motor speed parameter which is related to the rotational speed of an electric motor of an electric motor unit of the electric bicycle. The determined motor speed parameter may be made available via the bicycle bus system. The control unit of the human-machine interface unit may receive and/or read and/or request the motor speed parameter via the bicycle bus system.

Additionally or alternatively, the electric bicycle may comprise at least one sensor unit which is configured to determine, in particular to measure, a motor current parameter which is related to an electric motor current of an electric motor of an electric motor unit of the electric bicycle. The determined motor current parameter may be made available via the bicycle bus system. The control unit of the human-machine interface unit may receive and/or read and/or request the motor current parameter via the bicycle bus system.

Additionally or alternatively, the electric bicycle may comprise at least one sensor unit which is configured to determine, in particular to measure, a motor power parameter which is related to power of an electric motor of an electric motor unit of the electric bicycle. The determined motor speed parameter may be made available via the bicycle bus system. The control unit of the human-machine interface unit may receive and/or read and/or request the motor power parameter via the bicycle bus system.

Additionally or alternatively, the electric bicycle may comprise at least one sensor unit which is configured to determine, in particular to measure, at least one biometric parameter of the rider. The determined biometric parameter is made available via the bicycle bus system. Biometric parameters provided by the biometric sensor unit may be the heart rate of the rider and/or the blood pressure of the rider and/or oxygen saturation of the blood of the rider and/or VO₂ max (maximal oxygen consumption) of the rider and/or the weight of the rider and/or the age of the rider or other biometric parameters of the rider. In particular, the biometric sensor unit may be wirelessly connected to the bicycle bus system. In particular, the biometric sensor unit may be formed by a smart phone and/or smart watch. The biometric parameter may be given in bpm (beat per minute), VO₂ or others. The control unit of the human-machine interface unit may receive and/or read and/or request the biometric parameter via the bicycle bus system.

The invention further relates to an operating method for a control unit of a human-machine interface unit of an electric bicycle according to the invention. The operating method may be a computer-implemented method.

The control unit receives an acceleration value provided by the at least one accelerometer of the human-machine interface unit and an angular rate value provided by the at least one gyroscope of the human-machine interface unit. The control unit determines system information related to the electric bicycle depending operational parameters in the bus system and/or on the received acceleration value and the received angular rate value, wherein the control unit controls the electric bicycle depending on the determined system information. The control unit of the human-machine interface unit may send a command message via the bicycle bus system in order to control components of the electric bicycle which are connected to the bicycle bus system.

To control the electric bicycle may mean that the control unit predicts operational parameters of the electric bicycle. In addition or alternatively, to control the electric bicycle may mean that the control unit of the human-machine interface unit verifies operational parameters of the electric bicycle. In addition or alternatively, to control the electric bicycle may mean that the control unit of the human-machine interface unit controls the electric bicycle and/or components of the electric bicycle. In addition or alternatively, to control the electric bicycle may mean that the control unit of the human-machine interface unit controls the electric bicycle and/or components of the electric bicycle based on predicted operational parameters and/or environmental information and/or operational status of the electric bicycle. In particular, a component of the electric bicycle which is controlled by the control unit of the human-machine interface unit may be an electric motor unit and/or a communication unit for wireless communication.

To verify operational parameters of the electric bicycle may mean that the control checks the plausibility of sensor data and/or operational parameters which are provided via a bicycle bus system to human-machine interface by using a computational method on the operational parameters and the potential acceleration value provided by the at least one accelerometer, and the potential angular rate value provided by the at least one gyroscope and/or at least one operational parameter of the electric bicycle provided via the bicycle bus system.

The system information may be environmental information related to the environment of the electric bicycle, and/or one predicted operational parameter of the electric bicycle, and/or an operational status of the electric bicycle. Predicted operational parameters of the electric bicycle may be used by the control unit of the human-machine interface to check the plausibility of sensor data and/or operational parameters which are provided via a bicycle bus system to human-machine interface. Predicted operational parameters of the electric bicycle may be used by the control unit of the human-machine interface if a sensor unit is missing or/and malfunctions and/or to enhance user experience. These predicted operational parameters may be used to determine environmental information and/or to determine an operational status of the electric bicycle and/or of the user riding it. The operational status of the user may for example indicate that the user is pedaling with less force since he/she is tired.

In an advantageous embodiment of the operating method according to the invention, the control unit receives one or more, in particular all, operational parameters of the electric bicycle via a bicycle bus system and determines system information related to the electric bicycle depending on the received acceleration value and the received angular rate value and at least one received operational parameter of the electric bicycle.

In an advantageous embodiment of the operating method according to the invention, the control unit uses at least one pre-trained model to determine system information related to the electric bicycle, wherein the at least one pre-trained models provide system information related to the electric bicycle depending on the received acceleration value and the received angular rate value and/or at least one received operational parameter of the electric bicycle.

The pre-trained model is a model which was trained on a given input data or the pre-trained model may be self-trained model. The pre-trained model may be trained by supervised learning wherein the pre-trained model defines a function that maps an input data to an output data based on example input-output pairs. As an example, to train the model, the input training data may be a vector of x operational parameters of the electric bicycle, where x is the number of operational parameters determined by sensor units of the electric bicycle, and the output training data is one operational parameter determined by sensor units of the electric bicycle, which is not comprised in the input training data. Thus, such a model may be trained to predict one special operational parameter of the electric bicycle by using other operational parameters of the electric bicycle.

In an advantageous embodiment of the operating method according to the invention, the control unit uses a pre-trained decision tree as pre-trained model to determine the system information related to the electric bicycle.

The pre-trained decision tree may be trained by supervised learning wherein the pre-trained model defines a function that maps an input data to an output data based on example input-output pairs.

The pre-trained decision tree may be a pruned decision tree or unpruned decision tree. The pre-trained decision tree may be a pruned or unpruned C4.5 decision tree. The pre-trained decision tree may be a pruned or unpruned C4.5 decision tree which was trained by a J48 algorithm. The J48 algorithm is a Class for generating a pruned or unpruned C4.5 decision tree (see: Ross Quinlan (1993). C4.5: Programs for Machine Learning, Morgan Kaufmann Publishers, San Mateo, CA.).

The pre-trained decision tree may be a Hoeffding tree (VFDT). A Hoeffding tree (VFDT) is an incremental, anytime decision tree induction algorithm that is capable of learning from massive data streams, assuming that the distribution generating examples does not change over time (see: Geoff Hulten, Laurie Spencer, Pedro Domingos: Mining timechanging data streams. In: ACM SIGKDD Intl. Conf. on Knowledge Discovery and Data Mining, 97-106, 2001.)

The pre-trained decision tree may be a random tree. A random tree may be generated by a class for constructing a tree that considers K randomly chosen attributes at each node, and performs no pruning, and also has an option to allow estimation of class probabilities (or target mean in the regression case) based on a hold-out set (backfitting).

In an advantageous embodiment of the operating method according to the invention, at least one pre-trained model is an environmental model that determines environmental information related to the environment of the electric bicycle, and/or at least one pre-trained model is a parameter model that determines one operational parameter of the electric bicycle, and/or at least one pre-trained model is a status model that determines the operational status of the electric bicycle.

The control unit may have and/or use several pre-trained model which are described below. The control unit may have and/or use several environmental models each determining/predicting different environmental information of the electric bicycle. The pre-trained models of the control unit can be updated via a wireless or wired communication.

The control unit may have and/or use several parameter models each determining/predicting different operational parameter of the electric bicycle.

The control unit may have and/or use several status models each determining/predicting different operational states, in particular sets of states, of the electric bicycle.

In an advantageous embodiment of the operating method according to the invention, the environmental model can determine information related to the quality of the road surface, and/or that the environmental model can determine information related to the quality of the road surface based solely on the on the acceleration value and the angular rate value.

The control unit may send the information related to the quality of the road surface to a mobile application, in order to mark a track.

In an advantageous embodiment of the operating method according to the invention, the control unit uses the determined operational parameter by the parameter model to predict missing operational parameters, and/or the control unit uses the determined operational parameter by the parameter model to verify an operational parameter received via the bicycle bus system.

An operational parameter may be missing if a sensor unit of the electric bicycle is missing or/and malfunctions. These predicted operational parameters may be used to determine environmental information and/or to determine an operational status of the electric bicycle. Missing may mean that the operational parameters is not available via the bicycle bus system.

In an advantageous embodiment of the operating method according to the invention, at least one parameter model determines a speed parameter of the electric bicycle based on the acceleration value, the angular rate value and the following operational parameters of the electric bicycle received via the bicycle bus system: at least one pedal torque parameter and at least one pedal speed parameter. The control unit may compare the determined/predicted a speed parameter with the speed parameter received by a sensor unit via the bicycle bus system. If the difference between these two values (i.e. the predicted speed value and the measured speed value by a sensor unit) is higher than a predefined threshold, the control unit may take decisions as for instance initiate to turn off the electric bicycle. In such a case there is a high probability that the electric bicycle is hacked or modified in prohibited manner. The determined speed parameter of the electric bicycle may be the speed of the electric bicycle or a wheel speed of the electric bicycle.

The parameter model to determine/predict a speed parameter of the electric bicycle may be trained by input training data comprising different inputs values as can be the acceleration value, the angular rate value, at least one pedal torque parameter and at least one pedal speed parameter, while the output training data is a measured speed parameter of the electric bicycle. The measured speed parameter of the electric bicycle used as output training data may be the speed of the electric bicycle or a wheel speed of the electric bicycle.

Additionally or alternatively, at least one parameter model determines a pedal torque parameter of the electric bicycle based on the acceleration value, the angular rate value and the following operational parameters of the electric bicycle received via the bicycle bus system: speed parameter and at least one pedal speed parameter.

The parameter model may determine a first pedal torque parameter of a first pedal of the electric bicycle and/or a second pedal torque parameter of a second pedal of the electric bicycle.

The control unit may save and/or transfer the determined/predicted pedal torque parameter of the electric bicycle in to generate and/or support the generation of trips statistics. The control unit may initiate to display hints for optimal pedaling on a display unit of the human-machine interface. The control unit may control an electric motor unit of the electric bicycle via bicycle bus system command in order to adapt and/or optimize the operation of the electric bicycle.

The parameter model to determine/predict a pedal torque parameter of the electric bicycle may be trained by input training data comprising different input values as for example the acceleration value, the angular rate value, speed parameter and at least one pedal speed parameter, while the output training data is a measured pedal torque parameter of the electric bicycle.

Additionally or alternatively, at least one parameter model determines a pedal speed parameter of the electric bicycle based on the acceleration value, the angular rate value and a speed parameter received via the bicycle bus system. The determined pedal speed parameter may be the rotational speed of a pedal given in revolutions per minute.

The control unit may use the determined pedal speed parameter for cadence prediction for trip statistics or hints for choosing the optimal gear settings. The control unit may initiate to display hints for gear settings on a display unit of the human-machine interface.

The control unit may use the determined pedal speed parameter to control a gear unit of the electric bicycle. The control unit may use the determined pedal speed parameter to determine optimal gear settings and to check whether the present gear settings of the gear unit are the optimal gear settings and if not, to initiate an change of the gear settings of the gear unit via bicycle bus system command in order to adapt and/or optimize the operation of the electric bicycle.

In an advantageous embodiment of the operating method according to the invention, at least one status model determines the operational status of the electric bicycle based on the acceleration value, the angular rate value and the following operational parameters of the electric bicycle received via the bicycle bus system: a speed parameter, at least one pedal torque parameter and at least one pedal speed parameter, wherein status model determines the operational status according to the following status list: idle status, sprint status, braking status, normal status, uphill status, downhill status, emergency status, walking status, fixie stop status, trail status or unbalanced status.

The status list may contain the following statuses: idle status, sprint status, braking status, normal status, uphill status, downhill status, emergency status, or walking status. The status list may contain the following statuses: fixie stop status, trail status or unbalanced status.

The fixie stop status may mean that the pedaling of the rider of the electric bicycle is balanced, in particular with respect to the torque provided to one or both pedals by the rider. Balanced in this context may mean that the torque provided to one or both pedal for a given time period is constant, in particular essentially constant.

The unbalanced status may mean that the pedaling of the rider of the electric bicycle is not balanced, in particular with respect to the torque provided to one or both pedals by the rider. The unbalanced status may be also called caring mode and/or compensed ride mode.

The trail status may mean that there is unbalanced pedaling of the rider of the electric bicycle caused by a wheel spin. In contrast to a trail status, in the unbalanced status the unbalanced pedaling of the rider of the electric bicycle is caused not by a wheel spin but for example by the slope of the road.

The parameter model to determine/predict a pedal torque parameter of the electric bicycle may be trained by input training data comprising inputs values as for example the acceleration value, the angular rate value, a speed parameter, at least one pedal torque parameter and at least one pedal speed parameter, while the output training data is a status of the status list of the electric bicycle.

If the status model determines that the electric bicycle is in the idle status, the control unit may initiate via a bicycle bus command to turn of the electric bicycle if the electric bicycle is in the idle status longer than a predefined time.

If the status model determines that the electric bicycle is in the sprint status, the control unit may initiate via a bicycle bus command to provide maximum assistance by electric motor unit of the electric bicycle.

If the status model determines that the electric bicycle is in the braking status, the control unit may initiate via a bicycle bus command to reduced assistance by electric motor unit of the electric bicycle. If the status model determines that the electric bicycle is in the braking status, the control unit may initiate via a bicycle bus command to stop assistance by electric motor unit of the electric bicycle. If the status model determines that the electric bicycle is in the braking status, the control unit may initiate via a bicycle bus command to block an electric motor of a electric motor unit of the electric bicycle. Additionally or alternatively, if the status model determines that the electric bicycle is the braking status, the control unit may initiate via a bicycle bus command to turn on one or more rear lights of the electric bicycle.

If the status model determines that the electric bicycle is in the normal status, the control unit may initiate via a bicycle bus command to provide moderate (for example 50% of the maximum assistance or less) assistance by electric motor unit of the electric bicycle.

If the status model determines that the electric bicycle is in the uphill status, the control unit may initiate via a bicycle bus command to provide maximum assistance by electric motor unit of the electric bicycle.

If the status model determines that the electric bicycle is in the downhill status, the control unit may initiate via a bicycle bus command to turn off assistance by electric motor unit of the electric bicycle. If the status model determines that the electric bicycle is the downhill status, the control unit may initiate via a bicycle bus command to initiate a recuperation mode of an electric motor unit of the electric bicycle in order to provide electric power to a battery of the electric bicycle during the downhill status of the electric bicycle.

If the status model determines that the electric bicycle is in the fall status, the control unit may initiate via a bicycle bus command to turn of the bicycle and to call an emergency contact via a mobile phone and/or a communication unit of the electric bicycle.

If the status model determines that the electric bicycle is in the walking status, the control unit may initiate via a bicycle bus command to provide minimum assistance (for example 5% of the maximum assistance or less) by electric motor unit of the electric bicycle.

If the status model determines that the electric bicycle is in the fixie stop status, the control unit may initiate via a bicycle bus command to turn off assistance systems, in particular all assistance systems, of the electric bicycle.

If the status model determines that the electric bicycle is in the trail status, the control unit may check a slope value, speed and acceleration. If these values are periodic and are out of predefined limits, then a wheel spin (lost traction/grip) is detected. In this case, the control unit may initiate via a bicycle bus command to provide reduce the assistance by electric motor unit of the electric bicycle in order to provide a softer push. This operation mode may be also called TRAIL assist level/mode.

If the status model determines that the electric bicycle is in the trail status, the control unit may check changing of acceleration and read torque data (left/right leg balance and cadence). With the acceleration pattern and torque sensor data the control unit may initiate via a bicycle bus command to a motor control of a electric motor unit of the electric bicycle to provide assistance during unbalanced pedaling by the rider.

In an advantageous embodiment of the operating method according to the invention, at least one status model determines the operational status of a wheel the electric bicycle based on the acceleration value, the angular rate, wherein status model determines the operational status according to the following status list: a wheel has traction or a wheel has traction.

If the information related to occurrence of a wheel spin of a wheel of the electric bicycle indicates the occurrence of a wheel spin, i.e. a loss of traction of a wheel, the control unit may initiate and/or perform the following method steps: check changing of the acceleration value and read the speed parameter of the electric bicycle; if the acceleration pattern does not match to speed parameter, the control unit may initiate a reduction of the assistance and/or drive power provided by an electric motor unit of the electric bicycle. The control unit may initiate a reduction of the assistance and/or drive power provided by the electric motor unit of the electric bicycle by a command message a motor controller of the the electric motor unit via the bicycle bus system.

In an advantageous embodiment of the electric bicycle according to the invention, the control unit of the human-machine interface unit is programmed and/or formed to perform the method described above.

The invention further relates to the use of a pre-trained or self-trained model, in particular a decision tree, in a control unit of an electric bicycle and/or in a human-machine interface unit of an electric bicycle, in particular of an electric bicycle according to the invention, determine and/or verify an operational parameter of the electric bicycle, wherein the pre-trained or self-trained model predicts the operational parameter depending on an acceleration value provided by the at least one accelerometer of the human-machine interface unit and depending on an angular rate value provided by the at least one gyroscope of a human-machine interface unit and/or depending on at least one biometric parameter of the rider provided by at least one biometric sensor unit of the electric bicycle. The pre-trained model may be a pre-trained decision tree. In particular, the invention relates to the use of the method according to the invention in a human-machine interface unit of an inventive electric bicycle according to the invention.

Further important features and advantages of the invention result from the dependent claims, from the drawing and from the corresponding figure description based on the drawing.

It is apparent that the above-mentioned features and the features to be explained hereafter are usable not only in the respective specified combination, but also in different combinations or alone without leaving the scope of the present invention. Preferred design embodiments of the invention are illustrated in the drawing and are explained in more detail in the following description.

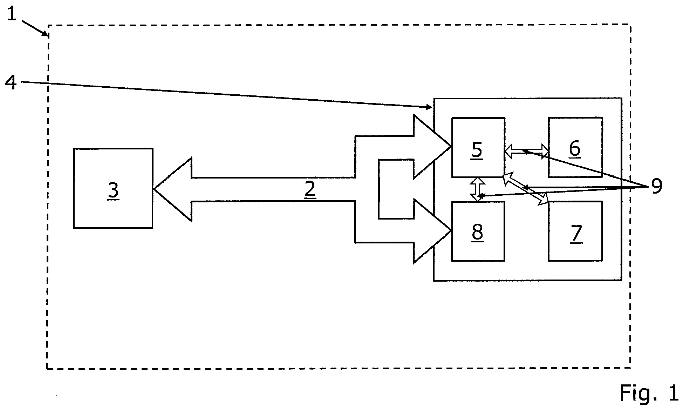

The only figure 1 shows an electric bicycle 1, in particular a pedelec, comprising a bicycle bus system 2 for communication, in particular for wired and/or wireless communication, between components of the electric bicycle 1. Some components of the electric bicycle 1 like an electric motor unit are not shown in the figure 1.

The electric bicycle 1 has one or more sensor units 3 each configured to determine at least one operational parameter of the electric bicycle 1, wherein determined operational parameters are made available via the bicycle bus system 2.

The electric bicycle 1 has a human-machine interface unit 4 comprises a control unit 5 which is connected to the bicycle bus system 2 for communication, in particular for wired and/or wireless communication. The human-machine interface unit 4 comprises a display control unit 8 which is formed separately with respect to the control unit 5, wherein display control unit 8 is connected to the bicycle bus system 2 for communication, in particular for wired and/or wireless communication. The display control unit 8 may be connected to a display unit of the human-machine interface unit 4. The display unit is not shown in figure 1.

The human-machine interface unit 4 may comprise at least one accelerometer 6 which is configured to determine an acceleration value which is related to the acceleration of the human-machine interface unit 4, wherein the at least one accelerometer 6 is formed to provide the determined acceleration value to the control unit 5.

The human-machine interface unit 4 may comprise at least one gyroscope 7 which is configured to determine an angular rate value which is related to the angular rate of the human-machine interface unit 4, wherein the at least one gyroscope 7 is formed to provide the determined angular rate value to the control unit 5.

The human-machine interface unit 4 comprises an internal bus system 9 for communication, in particular for wired and/or wireless communication, between components of the human-machine interface unit 4, wherein the internal bus system 9 may be formed separately or not separately formed with respect to bicycle bus system 2.

The at least one accelerometer 6 of the human-machine interface unit 4 is connected to the control unit 5 via the internal bus system 9 for communication, in particular for wired and/or wireless communication. The at least one gyroscope 7 of the human-machine interface unit 4 is connected to the control unit 5 via the internal bus system 9 for communication, in particular for wired and/or wireless communication. The display control unit 8 is connected to the control unit 5 via the internal bus system 9 for communication, in particular for wired and/or wireless communication.

The control unit 5 of the human-machine interface unit 4 is programmed and/or formed to determine system information related to the electric bicycle 1 depending on the acceleration value provided by the at least one accelerometer 6 and the angular rate value provided by the at least one gyroscope 7 and/or at least one operational parameter of the electric bicycle 1 provided via the bicycle bus system 2, wherein the control unit 5 of the human-machine interface unit 4 is programmed and/or formed to control the electric bicycle 1 depending on the determined system information. The control unit 5 may control the electric bicycle 1 and/or components of the electric bicycle 1 via bicycle bus commands which are transferred via the bicycle bus system 2.

## Claims

1. Electric bicycle (1), in particular a pedelec, comprising:
- a bicycle bus system (2) for communication between components of the electric bicycle (1),
- at least one component or several components of the electric bicycle (1) which are connected to the bicycle bus system (2) for providing operational parameters of the electric bicycle (1) via the bicycle bus system (2),
- at least one control unit (5) being connected to the bicycle bus system (2) for receiving operational parameters of the electric bicycle (1) via the bicycle bus system (2),
- wherein the control unit (5) is programmed and/or formed to determine system information related to the electric bicycle (1) using at least one parameter of the electric bicycle (1), which is provided via the bicycle bus system (2),
- wherein the control unit (5) is programmed and/or formed to control the electric bicycle (1) depending on the determined system information.

2. Electric bicycle (1) according to Claim 1, further comprising:
- at least one accelerometer (6) which is configured to determine an acceleration value, wherein the at least one accelerometer (6) is formed to provide the determined acceleration value to the control unit (5),
- at least one gyroscope (7) which is configured to determine an angular rate value, wherein the at least one gyroscope (7) is formed to provide the determined angular rate value to the control unit (5),
- wherein the control unit (5) is programmed and/or formed to determine system information related to the electric bicycle (1) depending on the acceleration value provided by the at least one accelerometer (6), and the angular rate value provided by the at least one gyroscope (7) and at least one operational parameter of the electric bicycle (1) provided via the bicycle bus system (2).

3. Electric bicycle (1) according to Claim 1 or 2,
- wherein the system information determined by the control unit (5) is a predicted operational parameter of the electric bicycle (1) corresponding to an operational parameter of the electric bicycle (1) received via the bicycle bus system (2),
- wherein the control unit (5) is programmed and/or formed to compare the received operational parameter with the predicted operational parameter to check the plausibility of data being provided via a bicycle bus system (2).

4. Electric bicycle (1), in particular according to any one of the Claims 1 to 3, comprising:
- a bicycle bus system (2) for communication between components of the electric bicycle (1),
- one or more sensor units (3) each configured to determine at least one operational parameter of the electric bicycle (1), wherein determined operational parameters are made available via the bicycle bus system (2),
- a human-machine interface unit (4) comprising control unit (5) which is connected to the bicycle bus system (2) for communication,
- wherein the human-machine interface unit (4) comprises at least one accelerometer (6) which is configured to determine an acceleration value which is related to the acceleration of the human-machine interface unit (4), wherein the at least one accelerometer (6) is formed to provide the determined acceleration value to the control unit (5),
- wherein the human-machine interface unit (4) comprises at least one gyroscope (7) which is configured to determine an angular rate value which is related to the angular rate of the human-machine interface unit (4), wherein the at least one gyroscope (7) is formed to provide the determined angular rate value to the control unit (5),
- wherein the control unit (5) of the human-machine interface unit (4) is programmed and/or formed to determine system information related to the electric bicycle (1) depending on the acceleration value provided by the at least one accelerometer (6), and the angular rate value provided by the at least one gyroscope (7) and/or at least one operational parameter of the electric bicycle (1) provided via the bicycle bus system (2),
- wherein the control unit (5) of the human-machine interface unit (4) is programmed and/or formed to control the electric bicycle (1) depending on the determined system information.

5. The electric bicycle (1) according to Claim 4,
**characterized in that**
- the human-machine interface unit (4) comprises a display control unit (8) which is formed separately with respect to the control unit (5),
- wherein display control unit (8) is connected to the bicycle bus system (2) for communication,
- wherein the human-machine interface unit (4) comprises an internal bus system (9) for communication between components of the human-machine interface unit (4),
- wherein the internal bus system (9) is formed separately with respect to bicycle bus system (2),
- wherein the at least one accelerometer (6) of the human-machine interface unit (4) is connected to the control unit (5) via the internal bus system (9) for communication,
- wherein the at least one gyroscope (7) of the human-machine interface unit (4) is connected to the control unit (5) via the internal bus system (9) for communication,
- wherein the display control unit (8) is connected to the control unit (5) via the internal bus system (9) for communication.

6. The electric bicycle (1) according to Claim 4 or 5,
**characterized in that**
- at least one sensor unit (3) is configured to determine a speed parameter which is related to the speed of the electric bicycle (1), wherein the determined speed parameter is made available via the bicycle bus system (2), and/or
- at least one sensor unit (3) is configured to determine a pedal torque parameter which is related to the torque of a pedal of the electric bicycle (1), wherein the determined pedal torque parameter is made available via the bicycle bus system (2), and/or
- at least one sensor unit (3) is configured to determine a pedal speed parameter which is related to the rotational speed of a pedal of the electric bicycle (1), wherein the determined pedal speed parameter is made available via the bicycle bus system (2), and/or
- at least one sensor unit (3) is configured to determine a pedal angle parameter which is related to the angular position of a pedal of the electric bicycle (1), wherein the determined pedal angle parameter is made available via the bicycle bus system (2), and/or
- at least one sensor unit (3) is configured to determine at least one biometric parameter of the rider.

7. Operating method for the control unit (5) of a human-machine interface unit (4) of an electric bicycle (1) according to any one of the Claims 1 to 6,
- in which the control unit (5) receives an acceleration value provided by the at least one accelerometer (5) of the human-machine interface unit (4),
- wherein the control unit (5) receives an angular rate value provided by the at least one gyroscope (6) of the human-machine interface unit (4),
- wherein the control unit (5) determines system information related to the electric bicycle (1) depending on the operational parameters in the bus system (2) and/or on the received acceleration value and the received angular rate value,
- wherein the control unit (5) controls the electric bicycle (1) depending on the determined system information.

8. The operating method according to Claim 7,
**characterized in that**
- the control unit (5) receives one or more, in particular all, operational parameters of the electric bicycle (1) via a bicycle bus system (2),
- wherein the control unit (5) determines system information related to the electric bicycle (1) depending on the received acceleration value and the received angular rate value and at least one received operational parameter of the electric bicycle (1).

9. The operating method according to Claim 7 or 8,
**characterized in that**
- the control unit (5) uses at least one pre-trained model to determine system information related to the electric bicycle (1),
- wherein the at least one pre-trained models provide system information related to the electric bicycle (1) depending on the received acceleration value and the received angular rate value and/or at least one received operational parameter of the electric bicycle (1).

10. The operating method according to Claim 9,
**characterized in that**
the control unit (5) uses a pre-trained decision tree as pre-trained model to determine the system information related to the electric bicycle (1).

11. The operating method according to Claim 9 or 10,
**characterized in that**
- at least one pre-trained model is an environmental model that determines environmental information related to the environment of the electric bicycle (1), and/or
- at least one pre-trained model is a parameter model that determines one operational parameter of the electric bicycle (1), and/or
- at least one pre-trained model is a status model that determines the operational status of the electric bicycle (1).

12. The operating method according to Claim 11,
**characterized in**
- **that** the environmental model determines information related to the quality of the road surface, and/or
- **that** the environmental model determines information related to the quality of the road surface based solely on the on the acceleration value and the angular rate value.

13. The operating method according to Claim 11,
**characterized in**
- **that** the control unit (5) uses the determined operational parameter by the parameter model to predict missing operational parameters, and/or
- **that** the control unit (5) uses the determined operational parameter by the parameter model to verify an operational parameter received via the bicycle bus system (2).

14. The operating method according to Claim 11 or 13,
**characterized in that**
- at least one parameter model determines a speed parameter of the electric bicycle (1) based on the acceleration value, the angular rate value and the following operational parameters of the electric bicycle (1) received via the bicycle bus system (2): at least one pedal torque parameter and at least one pedal speed parameter, and/or
- at least one parameter model determines a pedal torque parameter of the electric bicycle (1) based on the acceleration value, the angular rate value and the following operational parameters of the electric bicycle (1) received via the bicycle bus system (2): speed parameter and at least one pedal speed parameter, and/or
- at least one parameter model determines a pedal speed parameter of the electric bicycle (1) based on the acceleration value, the angular rate value and a speed parameter received via the bicycle bus system (2).

15. The operating method according to Claim 11,
**characterized in that**
- at least one status model determines the operational status of the electric bicycle (1) based on the acceleration value, the angular rate value and the following operational parameters of the electric bicycle (1) received via the bicycle bus system (2): a speed parameter, at least one pedal torque parameter and at least one pedal speed parameter,
- wherein status model determines the operational status according to the following status list: idle status, sprint status, braking status, normal status, uphill status, downhill status, emergency status, walking status, fixie stop status, trail status or unbalanced status.

16. The operating method according to Claim 11,
**characterized in that**
- at least one status model determines the operational status of a wheel the electric bicycle (1) based on the acceleration value, the angular rate,
- wherein status model determines the operational status according to the following status list: a wheel has traction or a wheel has traction.

17. The electric bicycle (1) according to any one of the Claims 1 to 6,
**characterized in that**
the control unit (5), in particular the control unit (5) of the human-machine interface unit (4), is programmed and/or formed to perform the method according to any one of the Claims 7 to 16.

18. Use of a pre-trained or self-trained model in a control unit (5) of an electric bicycle (1) and/or in a human-machine interface unit (4) of an electric bicycle (1) to determine and/or verify an operational parameter of the electric bicycle (1), wherein the pre-trained or self-trained model predicts the operational parameter depending on an acceleration value provided by the at least one accelerometer (6) of the human-machine interface unit (4) and depending on an angular rate value provided by the at least one gyroscope (7) of a human-machine interface unit (4).
